# EUROPÄISCHE PATENTSCHRIFT

(11) **EP 2 858 858 B1**
(45) Veröffentlichungstag und Bekanntmachung des Hinweises auf die Patenterteilung: **14.09.2016**
(21) Anmeldenummer: 13723098.3
(22) Anmeldetag: 14.05.2013
(51) Int. Cl.: B60R 21/017, G05F 1/575, H02M 3/156

(54) **INTEGRIERTER REGLER, INSBESONDERE SPANNUNGSREGLER, UND STEUERGERÄT FÜR PERSONENSCHUTZMITTEL MIT KONFIGURIERBARER AUSGANGSSPANNUNG**
INTEGRATED REGULATOR, IN PARTICULAR VOLTAGE REGULATOR, AND CONTROLLER FOR PASSENGER PROTECTION MEANS, WITH CONFIGURABLE OUTPUT VOLTAGE OF THE CONTROLLER
RÉGULATEUR INTÉGRÉ, NOTAMMENT RÉGULATEUR DE TENSION, ET APPAREIL DE COMMANDE POUR DES MOYENS DE PROTECTION DES PERSONNES PRÉSENTANT UNE TENSION DE SORTIE CONFIGURABLE

(30) Priorität: 06.06.2012 DE 102012209583
(43) Veröffentlichungstag der Anmeldung: 15.04.2015
(73) Patentinhaber: Robert Bosch GmbH, 70442 Stuttgart (DE)
(72) Erfinder: SIEVERS, Falko, 72762 Reutlingen (DE); SCHUMACHER, Hartmut, 71691 Freiberg (DE); LIST, Carsten, 74399 Walheim (DE)
(86) Internationale Anmeldenummer: PCT/EP2013/059884
(87) Internationale Veröffentlichungsnummer: WO 2013/182387

(56) Entgegenhaltungen:
- DE-A1-102010 043 100
- US-A1- 2002 121 882
- US-A1- 2006 273 767
- US-A1- 2008 150 436

## Beschreibung

### Stand der Technik

Die Erfindung geht aus von einem integrierten Regler, insbesondere Spannungsregler für Personenschutzmittel in einem Fahrzeug nach der Gattung des unabhängigen Patentanspruchs 1 und von einem Steuergerät zur Ansteuerung von Personenschutzmitteln in einem Fahrzeug nach der Gattung des unabhängigen Patentanspruchs 11.

Aus dem Stand der Technik bekannte integrierte Spannungsregler bieten die Möglichkeit, verschiedene fest vorgegebene Ausgangsspannungen zu erzeugen. So gibt es von vielen Spannungsreglern unterschiedliche Ausführungsvarianten, welche sich lediglich in der zu regelnden Ausgangsspannung unterscheiden, wobei jedoch für jeden Spannungswert ein separater Regler zu verwenden ist. Ebenso gibt es Spannungsregler, deren Ausgangsspannung durch Anpassung eines externen Spannungsteilers variabel eingestellt werden kann. Es wird dabei auf eine fest vorgegebene Rückkopplungsspannung ("Feedback"-Spannung) von beispielsweise 1.2V geregelt, welche über einen externen Spannungsteiler mit mindestens zwei Widerständen aus einer Ausgangsspannung des Reglers heruntergeteilt wird. Durch Variation dieses Spannungsteilers kann die Ausgangsspannung des Reglers eingestellt werden, welche immer größer als die Rückkopplungsspannung ist. Die bestehenden variablen Schaltungen sind dabei meist stark fehleranfällig. Ein Einzelfehler an einem der externen Spannungsteilerwiderstände kann direkt zu einer falschen und gegebenenfalls schädlichen Ausgangsspannung führen. Eine Fehlererkennung ist meist nur schwer möglich, da der Regler selbst nicht zwischen einem fehlerhaft zu großen bzw. kleinen Widerstandwert und einem bewusst gewählten zu großen bzw. kleinen Widerstandswert unterscheiden kann.

In der Offenlegungsschrift DE 10 2009 047 480 A1 werden beispielsweise ein Steuergerät und ein Verfahren zur Ansteuerung von Personenschutzmitteln für ein Fahrzeug beschrieben. Das beschriebene Steuergerät umfasst einen Versorgungsbaustein, welcher eine Eingangsspannung für die Ansteuerung der Personenschutzmittel wandelt. Zwischen einer Fahrzeugversorgungsspannung und der Eingangsspannung des Versorgungsbausteins ist ein Spannungsregler geschaltet, welcher die Eingangsspannung auf einen vorgegebenen ersten Wert begrenzt.

In der Schrift US2006/0273767 wird ein integrierter Spannungsregler gemäß dem Oberbegriff von Anspruch 1 offenbart. Offenbarung der Erfindung Der erfindungsgemäße integrierte Regler für Personenschutzmittel in einem Fahrzeug mit den Merkmalen des unabhängigen Patentanspruchs 1 und ein korrespondierendes Steuergerät zur Ansteuerung von Personenschutzmittel mit einem solchen integrierten Regler mit den Merkmalen des unabhängigen Patentanspruchs 11 haben den Vorteil, dass die Ausgangsspannung eines integrierten Reglers über ein korrespondierendes Konfigurationssignal einfach ausgewählt werden kann. Insbesondere bei einem Einsatz als integrierter Spannungsregler ist es somit möglich, flexibel auf Änderungen der Versorgungsspannungsanforderungen zu reagieren und Systembausteine wahlweise mit mindestens zwei verschiedenen Spannungen zu versorgen. Somit ist beispielsweise die Kompatibilität mit verschiedenen Mikrocontrollern, welche je nach Typ und Ausführung mit 3,3V oder 1,2V versorgt werden, gegeben und ein Wechsel zwischen den verschiedenen Mikrocontrollern in vorteilhafter Weise problemlos möglich. Zudem sind Ausführungsformen des erfindungsgemäßen integrierten Reglers robust gegen Einfachfehler, bieten umfassende Diagnosemöglichkeiten und können somit auch für sicherheitskritische Systeme eingesetzt werden, welche die Sicherheitsanforderungen gemäß ISO26262 erfüllen müssen.

Der Kern der Erfindung besteht darin, das Ausgangssignal eines integrierten Reglers zu ändern, ohne unterschiedliche Reglervarianten einzusetzen und ohne externe Spannungsteiler anzupassen und ohne einen zusätzlichen zweiten Regler einzusetzen. Die Änderung des Ausgangssignals ist somit kostenneutral möglich, indem bei Ausführungsbeispielen des erfindungsgemäßen integrierten Reglers beispielsweise lediglich eine Anpassung einer Pin-Konfiguration vorgenommen wird. So können beispielsweise mindestens ein offen gelassener Pin bzw. mindesten ein mit Masse verbundener Pin verschiedene Konfigurationen des integrierten Reglers repräsentieren. Eine solche Konfiguration steht dann im Unterschied zu einer Software-Programmierung, bei welcher die Umschaltung auf das korrekte Ausgangssignal erst erfolgt, wenn ein Großteil des Systems einschließlich eines Mikrocontrollers bereits in Betrieb sind, bereits zu Beginn der Systeminitialisierung zur Verfügung, so dass das Ausgangssignal direkt auf den korrekten Wert gesetzt wird. Somit ist in vorteilhafter Weise eine optimale Integration in das Signalüberwachungs- und Sicherheitskonzept möglich. Durch die komplette Integration des Reglerbausteins, ohne veränderbaren externen Spannungsteiler usw., kann zudem die Genauigkeit im Vergleich zu aus dem Stand der Technik bekannten Lösungen mit externen Spannungsteilerwiderständen deutlich verbessert werden. Durch eine geeignete Auswahl der Konfigurationsmöglichkeiten, wie mehrere Konfigurationspins und beispielsweise weiterhin eine beschränkte Anzahl an erlaubten Zuständen
und/oder eine zeitliche Einschränkung für die Pinabfrage können Ausführungsformen des erfindungsgemäßen integrierten Reglers robust gegen auftretende Einfachfehler an den Konfigurationspins gemacht werden, d.h. es kann durch einzelne fehlerhafte Kurzschlüsse an den Konfigurationspins nicht zu einem falschen Ausgangssignal kommen. Fehlkonfigurationen, welche durch Mehrfachfehler verursacht werden, können in vorteilhafter Weise durch einfaches Auslesen eines Statusregisters, welches die erkannte Konfiguration anzeigt, über eine Software-Abfrage detektiert werden.

Die Erfindung betrifft daher einen integrierten Regler gemä Anspruch 1.

Des Weiteren wird ein Steuergerät gemäß Anspruch 11 zur Ansteuerung von Personenschutzmitteln in einem Fahrzeug mit einer Regleranordnung vorgeschlagen, welche mindestens eine Spannung im Steuergerät regelt. Erfindungsgemäß weist die Regleranordnung mindestens einen erfindungsgemäßen integrierten Regler auf.

Durch die in den abhängigen Ansprüchen aufgeführten Maßnahmen und Weiterbildungen sind vorteilhafte Verbesserungen des im unabhängigen Patentanspruch 1 angegebenen integrierten Reglers für Personenschutzmittel in einem Fahrzeug möglich.

Besonders vorteilhaft ist, dass die mindestens zwei auswählbaren Vorgabesignale fest vorgegebene Referenzsignale oder aus dem Ausgangssignal erzeugbare Rückkopplungssignale sind. Da zum Regeln bzw. Wandeln des Eingangssignals in das Ausgangssignal ein aus dem Ausgangssignal erzeugtes Rückkopplungssignal mit einem vorgegebenen Referenzsignal verglichen wird, können verschiedene Ansteuersignale für das Regelelement zur Ausgabe von Ausgangssignalen mit verschiedenen auswählbaren Werten, durch Vorgabe von verschiedenen fest vorgegebenen Referenzsignalen oder durch Vorgabe von verschiedenen Rückkopplungssignalen erzeugt werden.

In vorteilhafter Ausgestaltung des erfindungsgemäßen integrierten Reglers kann die Konfigurationsschaltung zur Erzeugung des Ausgangssignals mit einem ersten Wert ein erstes Referenzsignal über eine Auswahlschaltung auswählen und an die Ansteuerschaltung anlegen, welche zur Erzeugung eines ersten Ansteuersignals für das Regelelement das erste Referenzsignal mit einem aus dem Ausgangssignal erzeugten Rückkopplungssignal vergleichen kann, wobei die Konfigurationsschaltung zur Erzeugung des Ausgangssignals mit einem zweiten Wert ein zweites Referenzsignal über die Auswahlschaltung auswählen und an die Ansteuerschaltung anlegen kann, welche zur Erzeugung eines zweiten Ansteuersignals für das Regelelement das zweite Referenzsignal mit dem aus dem Ausgangssignal erzeugten Rückkopplungssignal vergleichen kann. Die Auswahlschaltung kann bei einer einfachen Ausführung der Erfindung mit nur zwei Vorgabesignalen, beispielsweise als einfacher Halbleiterschalter ausgeführt werden, welcher in Abhängigkeit von einem Ansteuersignal entweder das erste Referenzsignal oder das zweite Referenzsignal auswählt und als ausgewähltes Vorgabesignal an die Ansteuerschaltung anlegt.

In weiterer vorteilhafter Ausgestaltung des erfindungsgemäßen integrierten Reglers kann die Konfigurationsschaltung zur Erzeugung des Ausgangssignals mit einem ersten Wert ein erstes Rückkopplungssignal über eine Auswahlschaltung auswählen und an die Ansteuerschaltung anlegen, welche zur Erzeugung eines ersten Ansteuersignals für das Regelelement das erste Rückkopplungssignal mit einem fest vorgegebenen Referenzsignal vergleichen kann, wobei die Konfigurationsschaltung zur Erzeugung des Ausgangssignals mit einem zweiten Wert ein zweites Rückkopplungssignal über die Auswahlschaltung auswählen und an die Ansteuerschaltung anlegen kann, welche zur Erzeugung eines zweiten Ansteuersignals für das Regelelement das zweite Rückkopplungssignal mit dem fest vorgegebenen Referenzsignal vergleichen kann.

In weiterer vorteilhafter Ausgestaltung des erfindungsgemäßen integrierten Reglers können mindestens zwei integrierte Spannungsteiler mit verschiedenen Teilerverhältnissen die mindesten zwei auswählbaren Rückkopplungssignale aus dem Ausgangssignal erzeugen. Das bedeutet, dass zwei Spannungsteiler mit verschiedenen vorgegebenen Widerstandskombinationen eingesetzt werden, welche verschiedene Ausgangsspannungen bewirken. Die Auswahlschaltung kann bei einer einfachen Ausführung der Erfindung mit nur zwei Vorgabesignalen, beispielsweise als einfacher Halbleiterschalter ausgeführt werden, welcher in Abhängigkeit von einem Ansteuersignal entweder ein Ausgangssignal eines ersten Spannungsteilers oder ein Ausgangssignal eines zweiten Spannungsteilers auswählt und als ausgewähltes Vorgabesignal an die Ansteuerschaltung anlegt.

In weiterer vorteilhafter Ausgestaltung des erfindungsgemäßen integrierten Reglers kann die Konfigurationsschaltung die Ermittlung der aktuellen Konfiguration und die Auswahl des Vorgabesignals während einer Systeminitialisierung durchführen. Dadurch steht das korrekte Ausgangssignal schon wesentlich früher als bei einer Software-Programmierung zur Verfügung.

Bei dem erfindungsgemäßen integrierten Regler wird das mindestens eine Konfigurationssignal mittels einer Pin-Konfiguration erzeugt wobei zur Erzeugung eines ersten logischen Signalpegels für das mindestens eine Konfigurationssignal ein korrespondierender Anschlusspin fest mit Masse verbunden ist, und wobei zur Erzeugung eines zweiten logischen Signalpegels für das mindestens eine Konfigurationssignal ein korrespondierender Anschlusspin offen gelassen ist. Zudem kann eine innerhalb oder außerhalb des integrierten Reglers angeordnete Pullup-Schaltung einen offengelassenen Anschlusspin auf den zweiten logischen Signalpegel bringen. Eine solche Pullup-Schaltung umfasst vorzugsweise einen ohmschen Widerstand, welcher mit einem vorgegebenen Spannungspotential verbunden ist, welches vorzugsweise den zweiten logischen Signalpegel repräsentiert. Die Erzeugung des mindestens einen Konfigurationssignals über die Pin-Konfiguration ermöglicht in vorteilhafter Weise eine einfache und kostengünstige Implementierung des erfindungsgemäßen integrierten Reglers.

In weiterer vorteilhafter Ausgestaltung des erfindungsgemäßen integrierten Reglers kann die Konfigurationsschaltung mindestens zwei Konfigurationssignale empfangen und auswerten, wobei die Konfigurationsschaltung eine logische Kombination der mindestens zwei Konfigurationssignale zur Auswahl des Vorgabesignals auswertet. Des Weiteren kann die Konfigurationsschaltung bei einer erkannten gültigen logischen Kombination der mindestens zwei Konfigurationssignale ein der erkannten logischen Kombination zugeordnetes Vorgabesignal auswählen, und bei einer erkannten ungültigen logischen Kombination der mindestens zwei Konfigurationssignale eine Ausgabe des Ausgangssignals verhindern. Zur Verbesserung der Fehlerdiagnose kann die Konfigurationsschaltung die erkannte logische Kombination der mindestens zwei Konfigurationssignale verriegeln und in einem Statusspeicher ablegen. Durch die Verriegelung der erkannten logischen Kombination kann in vorteilhafter Weise verhindert werden, dass während des Betriebs durch auftretende Fehler eine Änderung der Konfiguration bewirkt werden kann.

Ausführungsbeispiele der Erfindung sind in den Zeichnungen dargestellt und werden in der nachfolgenden Beschreibung näher erläutert. In den Zeichnungen bezeichnen gleiche Bezugszeichen Komponenten bzw. Elemente, die gleiche bzw. analoge Funktionen ausführen.

Kurze Beschreibung der Zeichnungen
Fig. 1 zeigt ein schematisches Blockschaltbild eines Ausschnitts eines Steuergeräts für Personenschutzmittel mit einem ersten Ausführungsbeispiel eines erfindungsgemäßen integrierten Reglers.
Fig. 2 zeigt ein schematisches Blockschaltbild eines Ausschnitts eines Steuergeräts für Personenschutzmittel mit einem zweiten Ausführungsbeispiel eines erfindungsgemäßen integrierten Reglers.

Aktuelle Steuergeräte für Personenschutzmittel in Kraftfahrzeugen zeichnen sich unter anderem dadurch aus, dass alle Versorgungsspannungen, welche für den Betrieb der Personenschutzmittel erforderlich sind, innerhalb des Personenschutzsystems selbst erzeugt werden. Somit kann sichergestellt werden, dass eine korrekte Funktionalität unabhängig von Schwankungen der Batteriespannung im Fahrzeug gegeben ist. Die verwendeten Spannungsregler können entweder als Linearregler oder DC/DC-Schaltwandler ausgeführt werden und stellen fest vorgegebene Ausgangsspannungen zur direkten Versorgung von anderen Personenschutzsystembausteinen, wie beispielsweise Mikrocontroller, Sensoren, Kommunikationsschnittstellen, Lampentreiber, usw., zur Verfügung. In den aktuellen Personenschutzsystemen werden beispielsweise Ausgangsspannungen von 6,7V, 5,0V und 3,3V zur Verfügung gestellt.

### Ausführungsformen der Erfindung

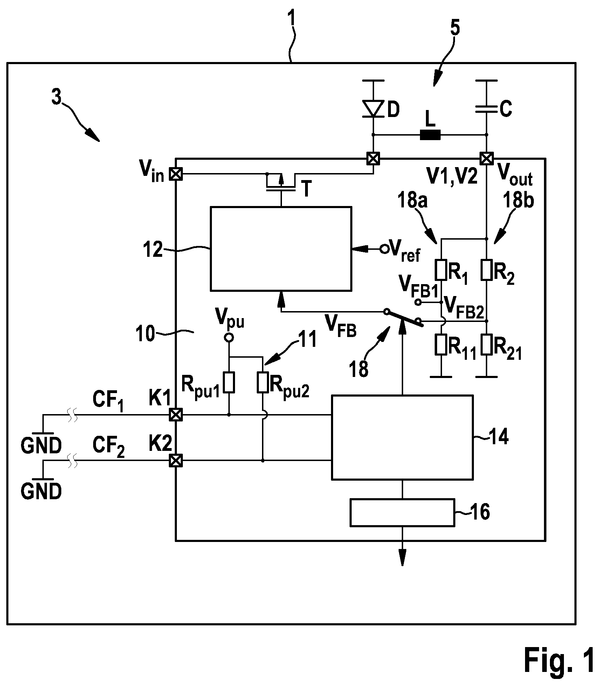

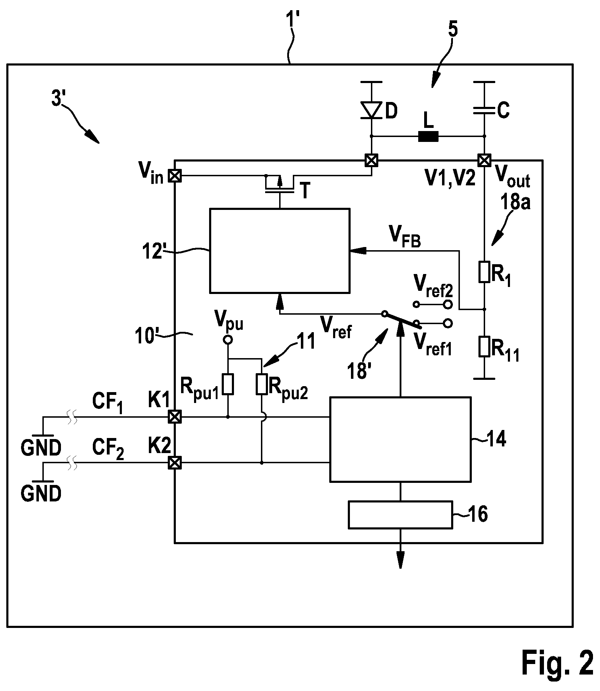

Wie aus Fig. 1 und 2 ersichtlich ist, umfassen die dargestellten Ausführungsbeispiele eines erfindungsgemäßen integrierten Reglers 10, 10', welcher in den dargestellten Ausführungsbeispielen als Spannungsregler für Personenschutzmittel in einem Fahrzeug ausgeführt ist, ein Regelelement T, welches ein Eingangssignal Vᵢₙ in ein Ausgangssignal Vₒᵤₜ mit einem vorgegebenen Wert wandelt, und eine Ansteuerschaltung 12, 12', welche das Regelelement T ansteuert, um das Ausgangssignal Vₒᵤₜ mit dem vorgegebenen Wert zur erzeugen. Erfindungsgemäß gibt die Ansteuerschaltung 12, 12' in Abhängigkeit von einem Vorgabesignal V_{FB1}, V_{FB2}, V_{ref1,} V_{ref2} das Ausgangssignal Vₒᵤₜ über das Regelelement T mit mindestens zwei verschiedenen auswählbaren Werten V1, V2 aus, wobei zur Auswahl des Wertes V1, V2 des Ausgangssignals Vₒᵤₜ eine Konfigurationsschaltung 14 mindestens ein Konfigurationssignal CF₁, CF₂ empfängt und auswertet und in Abhängigkeit von einer bei der Auswertung ermittelten Konfiguration, eines von mindestens zwei verschiedenen Vorgabesignalen V_{FB1}, V_{FB2}, V_{ref1}, V_{ref2} auswählt und an die Ansteuerschaltung 12, 12' zur Ausgabe des Ausgangssignals Vₒᵤₜ mit dem ausgewählten Wert V1, V2 anlegt.

Wie aus Fig. 1 und 2 weiter ersichtlich ist, können die mindestens zwei auswählbaren Vorgabesignale V_{FB1}, V_{FB2}, V_{ref1}, V_{ref2} fest vorgegebene Referenzsignale V_{ref1}, V_{ref2} oder aus dem Ausgangssignal Vₒᵤₜ erzeugbare Rückkopplungssignale V_{FB1}, V_{FB2} sein. Zum Regeln bzw. Wandeln des Eingangssignals Vᵢₙ in das Ausgangssignal Vₒᵤₜ vergleicht die Ansteuerschaltung 12, 12' jeweils ein aus dem Ausgangssignal Vₒᵤₜ erzeugtes Rückkopplungssignal V_{FB} mit einem vorgegebenen Referenzsignal V_{ref}. Daher können verschiedene Ansteuersignale für das Regelelement T zur Ausgabe von Ausgangssignalen Vₒᵤₜ mit verschiedenen auswählbaren Werten V1, V2 durch Vorgabe von verschiedenen fest vorgegebenen Referenzsignalen V_{ref1}, V_{ref2} oder durch Vorgabe von verschiedenen Rückkopplungssignalen V_{FB1}, V_{FB2} erzeugt werden.

Wie aus Fig. 1 weiter ersichtlich ist, sind mindestens zwei an die Ansteuerschaltung 12 ausgebbare Rückkopplungssignale V_{FB1}, V_{FB2} zur Erzeugung von mindestens zwei Ausgangssignalen Vₒᵤₜ mit verschiedenen Werten V1, V2 vorgesehen, wobei die Konfigurationsschaltung 14 mindestens ein Konfigurationssignal CF₁, CF₂ empfängt und auswertet und in Abhängigkeit von der Auswertung eines der mindestens zwei Rückkopplungssignale V_{FB1}, V_{FB2} zur Ausgabe an die Ansteuerschaltung 12 auswählt. Im dargestellten Ausführungsbeispiel erzeugen zwei in den Regler 10 integrierte Spannungsteiler 18a, 18b die mindesten zwei auswählbaren Rückkopplungssignale V_{FB1}, V_{FB2} aus dem Ausgangssignal Vₒᵤₜ. Die beiden integrierten Spannungsteiler 18a, 18b umfassen jeweils zwei Widerstände R1, R11, R2, R21, deren Widerstandswerte so gewählt sind, dass die beiden integrierten Spannungsteiler 18a, 18b verschiedene Teilerverhältnissen R1/R11 bzw. R2/R21 zur Erzeugung der Rückkopplungssignale V_{FB1}, V_{FB2} aufweisen.

Wie aus Fig. 1 weiter ersichtlich ist, wählt die Konfigurationsschaltung 14 zur Erzeugung des Ausgangssignals Vₒᵤₜ mit einem ersten Wert V1 ein erstes Rückkopplungssignal V_{FB1} über die Auswahlschaltung 18 aus, welche das ausgewählte erste Rückkopplungssignal V_{FB1} an die Ansteuerschaltung 12 anlegt. Die Ansteuerschaltung 12 vergleicht zur Erzeugung eines ersten Ansteuersignals für das Regelelement T das erste Rückkopplungssignal V_{FB1} mit einem fest vorgegebenen Referenzsignal V_{ref}. Zur Erzeugung des Ausgangssignals Vₒᵤₜ mit einem zweiten Wert V2, wählt die Konfigurationsschaltung 14 ein zweites Rückkopplungssignal V_{FB2} über die Auswahlschaltung 18 aus, welche das ausgewählte zweite Rückkopplungssignal V_{FB2} an die Ansteuerschaltung 12 anlegt. Zur Erzeugung eines zweiten Ansteuersignals für das Regelelement T vergleicht die Ansteuerschaltung 12 das zweite Rückkopplungssignal V_{FB2} mit dem fest vorgegebenen Referenzsignal V_{ref}.

Wie aus Fig. 2 weiter ersichtlich ist, sind mindestens zwei an die Ansteuerschaltung 12' ausgebbare Referenzsignale V_{ref1}, V_{ref2} zur Erzeugung von mindestens zwei Ausgangssignalen Vₒᵤₜ mit verschiedenen Werten V1, V2 vorgesehen, wobei die Konfigurationsschaltung 14 mindestens ein Konfigurationssignal CF₁, CF₂ empfängt und auswertet und in Abhängigkeit von der Auswertung eines der mindestens zwei Referenzsignale V_{ref1}, V_{ref2} zur Ausgabe an die Ansteuerschaltung 12' auswählt.

Wie aus Fig. 2 weiter ersichtlich ist, wählt die Konfigurationsschaltung 14 zur Erzeugung des Ausgangssignals Vₒᵤₜ mit einem ersten Wert V1 ein erstes Referenzsignal V_{ref1} über eine Auswahlschaltung 18' aus, welche das ausgewählte erste Referenzsignal V_{ref1} an die Ansteuerschaltung 12' anlegt. Zur Erzeugung eines ersten Ansteuersignals für das Regelelement T vergleicht die Ansteuerschaltung 12'das erste Referenzsignal V_{ref1} mit einem aus dem Ausgangssignal Vₒᵤₜ erzeugten Rückkopplungssignal V_{FB}. Zur Erzeugung des Ausgangssignals Vₒᵤₜ mit dem zweiten Wert V2 wählt die Konfigurationsschaltung 14 ein zweites Referenzsignal V_{ref2} über die Auswahlschaltung 18' aus, welche das ausgewählte zweite Referenzsignal V_{ref2} an die Ansteuerschaltung 12' anlegt. Zur Erzeugung eines zweiten Ansteuersignals für das Regelelement T vergleicht die Ansteuerschaltung 12' das zweite Referenzsignal V_{ref2} mit dem aus dem Ausgangssignal Vₒᵤₜ erzeugten Rückkopplungssignal V_{FB}. Im dargestellten zweiten Ausführungsbeispiel erzeugt ein in den Regler 10' integrierter Spannungsteiler 18a aus dem Ausgangssignal Vₒᵤₜ das Rückkopplungssignal V_{FB}, welches mit dem ausgewählten Referenzsignal V_{ref1}, V_{ref2} verglichen wird. Der integrierte Spannungsteiler 18a umfasst zwei Widerstände R1, R11, welche ein vorgegebenes Teilerverhältnissen R1/R11 aufweisen.

Wie aus Fig. 1 und 2 weiter ersichtlich ist, ist der integrierte Regler 10, 10' in den dargestellten Ausführungsbeispielen jeweils als ASIC-Baustein (ASIC: Anwendungsspezifische Integrierte Schaltung) ausgeführt und Teil einer Regleranordnung 3, 3' in einem Steuergerät 1, 1' für Erfindungsgemäß umfasst der integrierte Regler 10, 10' jeweils zwei Konfigurationspins K1, K2, und in den dargestellten Ausführungsbeispielen weiterhin einen Eingangspin, an welchem das Eingangssignal Vᵢₙ anliegt und zwei Ausgabepins zur Ausgabe des Ausgangssignals Vₒᵤₜ, wobei zwischen den Ausgabepins eine externe Beschaltung 5 vorgesehen ist, welche eine Verpolschutzdiode D sowie eine Induktivität L und eine Kapazität C zur Signalfilterung umfasst. Alternativ kann der erfindungsgemäße Regler 10, 10' aber auch in einen System-ASIC-Baustein (ASIC: Anwendungsspezifische Integrierte Schaltung) eines Steuergeräts 1, 1' des Personenschutzsystems integriert werden.

Der als Spannungsregler implementierte erfindungsgemäße Regler 10, 10' bietet beispielsweise die Möglichkeit wahlweise die Ausgangsspannung Vₒᵤₜ mit einem ersten Wert V1=1,2V oder mit einem zweiten Wert V2=3,3V am Reglerausgang zur Verfügung zu stellen. Die Auswahl dieser Spannung erfolgt über die zwei Konfigurationspins K1, K2. Der Status dieser beiden Konfigurationspins K1, K2 ist entweder ein logischer Low-Pegel (L), welcher durch einen externen Kurzschluss des korrespondierenden Konfigurationspins K1, K2 nach Masse GND realisiert wird, oder ein logischer High-Pegel (H), welcher durch einen offenen Konfigurationspins K1, K2 realisiert wird. In den dargestellten Ausführungsbeispielen bringt eine jeweils innerhalb des integrierten Reglers 10, 10' angeordnete Pullup-Schaltung 11 einen offengelassenen Konfigurationspin K1, K2 auf den logischen High-Pegel (H). Die Pullup-Schaltung 11 umfasst für jeden der Konfigurationspins K1, K2 einen Pullup-Widerstand Rₚᵤ₁, Rₚᵤ₂, welche jeweils mit einem Anschluss mit dem entsprechenden Konfigurationspin K1, K2 und mit dem anderen Anschluss mit einer Pullup-Spannung Vₚᵤ verbunden sind, deren Pegel ungefähr dem logischen High-Pegel (H) entspricht. Die Pegel der Konfigurationspins K1, K2 werden als Konfigurationssignale CF_{1,} CF₂ von der Konfigurationsschaltung 14 zurückgelesen und ausgewertet. Die Erkennung der aktuellen Konfiguration erfolgt dabei beispielsweise mit jeweils mindestens einem Spannungskomparator. Bei der Verwendung von zwei Konfigurationspins K1, K2 mit zwei Konfigurationssignalen CF₁, CF₂ sind vier Konfigurationskombinationen möglich, welche in Tabelle 1 dargestellt sind.

**Tabelle 1**

| CF₁ | CF₂ | Konfiguration |
|---|---|---|
| L | L | ungültig |
| L | H | Erste Ausgangsspannung |
| H | L | Zweite Ausgangsspannung |
| H | H | ungültig |

Von den vier Konfigurationskombinationen an den beiden Konfigurationspins K1, K2 sind im dargestellten Ausführungsbeispiel nur zwei Kombinationen gültig, bei welchen die beiden Konfigurationssignale CF₁, CF₂ unterschiedliche logische Pegel (H) (L) aufweisen. Somit ist sichergestellt, dass durch einen externen Kurzschluss an einem der Konfigurationspins K1, K2 kein fehlerhafter gültiger Zustand erreicht werden kann. Das System ist somit an den Konfigurationspins K1, K2 robust gegen Einfachfehler. Wird eine gültige Konfigurationskombination erkannt, dann wählt die Konfigurationsschaltung 14 über eine Auswahlschaltung 18, 18' das korrespondierende Vorgabesignal V_{FB1}, V_{FB2}, V_{ref1}, V_{ref2} aus, welches dann an die Ansteuerschaltung 12, 12' zur Erzeugung des Ansteuersignals für das Regelelement T angelegt wird.

Wird ein ungültiger Zustand erkannt, bei welchem die beiden Konfigurationssignale CF₁, CF₂ den gleichen logischen Pegel aufweisen, dann kann der konfigurierbare erfindungsgemäße Regler 10, 10' bzw. dessen Spannungsversorgung deaktiviert werden. Alternativ kann auch ein anderer Sicherheitsmechanismus verwendet werden, der sicherstellt, dass keine fehlerhafte Ausgangsspannung vom Regler 10, 10' ausgegeben wird. In jedem Fall wird vermieden, dass die angeschlossene Komponente, wie beispielsweise ein Mikrocontroller, mit einer falschen Spannung versorgt wird. Zudem wir das Gesamtsystem im Resetzustand, d.h. in einem "nicht aktiv" bzw. sicheren Zustand gehalten.

Die Auswertung der Konfigurationssignale CF₁, CF₂ an den Konfigurationspins K1, K2 erfolgt zu Beginn der Initialisierungsphase des Systems, sobald die internen Logikschaltungen des erfindungsgemäßen integrierten Reglers 10, 10' ausreichend versorgt sind. Es wird somit sichergestellt, dass die Reglerkonfiguration sofort korrekt erkannt und die damit verbundene Ausgangsspannung Vₒᵤₜ des erfindungsgemäßen integrierten Reglers 10, 10' sofort korrekt auf den gewünschten Wert V1 oder V2 eingestellt wird, bevor die damit versorgten Systemkomponenten durch den System-weiten-Reset freigegeben werden. Somit ist eine fehlerfreie Spannungsversorgung des Systems sichergestellt. Nach dem initialen Einlesen der Konfigurationssignale CF₁, CF₂ an den Konfigurationspins K1, K2 wird die erkannte Konfiguration verriegelt, so dass ein weiteres Ändern der Pin-Status keinen Einfluss mehr auf den Regler 10, 10' hat. Somit kann es im Normalbetrieb des Steuergeräts 1, 1' nicht zu fehlerhaften Spannungsänderungen, z.B. unter EMV-Einwirkung, kommen. Des Weiteren wird die erkannte Konfiguration der Konfigurationspins in einem vorzugsweise als Register ausgeführten Speichermittel 16 gespeichert. Das Speichermittel 16 kann dann im Betrieb beispielsweise durch eine Software-Abfrage ausgelesen werden. Dadurch kann eine möglicherweise durch Mehrfachfehler falsch erkannte Konfiguration erkannt werden und eine Fehleranzeige erfolgen.

Bei alternativen nicht dargestellten Ausführungsformen des erfindungsgemäßen integrierten Reglers 10, 10' können auch mehr als nur zwei Ausgangsspannungen eingestellt werden, sofern die Anzahl der Konfigurationspins bzw. die Anzahl der logischen Zustände vergrößert wird und entsprechend mehr Vorgabesignale V_{FB1}, V_{FB2}, V_{ref1}, V_{ref2} vorgehalten werden. So können beispielsweise mit drei Konfigurationspins, welche jeweils zwei logischen Zustände (H/L) einnehmen können, bereits vier gültige Konfigurationskombinationen (L-L-H, L-H-L, H-L-L und H-H-H) zur Auswahl vorgegeben werden, ohne dass die Robustheit gegen Einfachfehler reduziert wird. Ähnliches gilt, wenn man zusätzlich zu dem logischen High-Pegel und dem logischen Low-Pegel noch Zwischenpegel mittels zusätzlichen Spannungskomparatoren detektieren kann.

Des Weiteren können auch die Detektionsschwellen an den Konfigurationspins und die Art der Spannungszuführung abweichend zu den dargestellten Ausführungsbeispielen ausgeführt werden. Die dargestellten Ausführungsbeispiele des erfindungsgemäßen integrierten Reglers 10, 10' nutzen jeweils eine integrierte Pullup-Schaltung 11 mit einer internen Pullup-Spannung Vₚᵤ. Alternativ kann auch eine externe Pullup-Schaltung, d.h. eine außerhalb des integrierten Reglers 10, 10' angeordnete Pullup-Schaltung, und eine entsprechende externe Pullup-Spannung zur Erzeugung des High-Pegels (H) an einem offenen Konfigurationspin verwendet werden. Ebenso sind verschiedene Spannungspegel zur Erkennung verschiedener logischer Zustände möglich, beispielsweise Verbindung zu Masse GND oder zu verschiedenen Spannungspotentialen, wie beispielsweise 5,0V, 3,3V usw. Ausführungsformen des erfindungsgemäßen integrierten Reglers können beispielsweise als Linearregler oder DC/DC-Schaltwandler ausgeführt werden.

## Patentansprüche

1. Integrierter Regler, insbesondere Spannungsregler für Personenschutzmittel in einem Fahrzeug, mit einem Regelelement (T), welches ein Eingangssignal (Vᵢₙ) in ein Ausgangssignal (Vₒᵤₜ) mit einem vorgegebenen Wert wandelt, und einer Ansteuerschaltung (12, 12'), welche das Regelelement (T) ansteuert, um das Ausgangssignal (Vₒᵤₜ) mit dem vorgegebenen Wert zur erzeugen, wobei die Ansteuerschaltung (12, 12') in Abhängigkeit von einem Vorgabesignal (V_{FB1}, V_{FB2}, V_{ref1}, V_{ref2}) das Ausgangssignal (Vₒᵤₜ) über das Regelelement (T) mit mindestens zwei verschiedenen auswählbaren Werten (V1, V2) ausgibt, wobei zur Auswahl des Wertes (V1, V2) des Ausgangssignals (Vₒᵤₜ) eine Konfigurationsschaltung (14) mindestens ein Konfigurationssignal (CF₁, CF₂) empfängt und auswertet und in Abhängigkeit von einer bei der Auswertung ermittelten Konfiguration, eines von mindestens zwei verschiedenen Vorgabesignalen (V_{FB1}, V_{FB2}, V_{ref1}, V_{ref2}) auswählt und an die Ansteuerschaltung (12, 12') zur Ausgabe des Ausgangssignals (Vₒᵤₜ) mit dem ausgewählten Wert (V1, V2) anlegt, **dadurch gekennzeichnet, dass** das mindestens eine Konfigurationssignal (CF₁, CF₂) mittels einer Pin-Konfiguration erzeugbar ist, wobei zur Erzeugung eines ersten logischen Signalpegels (L) für das mindestens eine Konfigurationssignal (CF₁, CF₂) ein korrespondierender Anschlusspin (K1, K2) fest mit Masse (GND) verbunden ist, und wobei zur Erzeugung eines zweiten logischen Signalpegels (H) für das mindestens eine Konfigurationssignal (CF₁, CF₂) ein korrespondierender Anschlusspin (K1, K2) offen gelassen ist.

2. Integrierter Regler nach Anspruch 1, **dadurch gekennzeichnet, dass** die mindestens zwei auswählbaren Vorgabesignale (V_{FB1}, V_{FB2}, V_{ref1}, V_{ref2}) fest vorgegebene Referenzsignale (V_{ref1}, V_{ref2}) oder aus dem Ausgangssignal (Vₒᵤₜ) erzeugbare Rückkopplungssignale (V_{FB1}, V_{FB2}) sind.

3. Integrierter Regler nach Anspruch 2, **dadurch gekennzeichnet, dass** die Konfigurationsschaltung (14) zur Erzeugung des Ausgangssignals (Vₒᵤₜ) mit einem ersten Wert (V1) ein erstes Referenzsignal (V_{ref1}) über eine Auswahlschaltung (18') auswählt und an die Ansteuerschaltung (12') anlegt, welche zur Erzeugung eines ersten Ansteuersignals für das Regelelement (T) das erste Referenzsignal (V_{ref1}) mit einem aus dem Ausgangssignal (Vₒᵤₜ) erzeugten Rückkopplungssignal (V_{FB}) vergleicht, wobei die Konfigurationsschaltung (14) zur Erzeugung des Ausgangssignals (Vₒᵤₜ) mit einem zweiten Wert (V2) ein zweites Referenzsignal (V_{ref2}) über die Auswahlschaltung (18') auswählt und an die Ansteuerschaltung (12') anlegt, welche zur Erzeugung eines zweiten Ansteuersignals für das Regelelement (T) das zweite Referenzsignal (V_{ref2}) mit dem aus dem Ausgangssignal (Vₒᵤₜ) erzeugten Rückkopplungssignal (V_{FB}) vergleicht.

4. Integrierter Regler nach Anspruch 2, **dadurch gekennzeichnet, dass** die Konfigurationsschaltung (14) zur Erzeugung des Ausgangssignals (Vₒᵤₜ) mit dem ersten Wert (V1) ein erstes Rückkopplungssignal (V_{FB1}) über eine Auswahlschaltung (18) auswählt und an die Ansteuerschaltung (12) anlegt, welche zur Erzeugung eines ersten Ansteuersignals für das Regelelement (T) das erste Rückkopplungssignal (V_{FB1}) mit einem fest vorgegebenen Referenzsignal (V_{ref}) vergleicht, wobei die Konfigurationsschaltung (14) zur Erzeugung des Ausgangssignals (Vₒᵤₜ) mit dem zweiten Wert (V2) ein zweites Rückkopplungssignal (V_{FB2}) über die Auswahlschaltung (18) auswählt und an die Ansteuerschaltung (12) anlegt, welche zur Erzeugung eines zweiten Ansteuersignals für das Regelelement (T) das zweite Rückkopplungssignal (V_{FB2}) mit dem fest vorgegebenen Referenzsignal (V_{ref}) vergleicht.

5. Integrierter Regler nach Anspruch 4, **dadurch gekennzeichnet, dass** mindestens zwei integrierte Spannungsteiler (18a, 18b) mit verschiedenen Teilerverhältnissen (R1/R11, R2/R21) die mindesten zwei auswählbaren Rückkopplungssignale (V_{FB1}, V_{FB2}) aus dem Ausgangssignal (Vₒᵤₜ) erzeugen.

6. Integrierter Regler nach einem der Ansprüche 1 bis 5, **dadurch gekennzeichnet, dass** die Konfigurationsschaltung (14) die Ermittlung der aktuellen Konfiguration und die Auswahl des Vorgabesignals (V_{FB1}, V_{FB2}, V_{ref1}, V_{ref2}) während einer Systeminitialisierung durchführt.

7. Integrierter Regler nach Anspruch 1, **dadurch gekennzeichnet, dass** eine innerhalb oder außerhalb des integrierten Reglers (10, 10') angeordnete Pullup-Schaltung (11) einen offengelassenen Anschlusspin (K1, K2) auf den zweiten logischen Signalpegel (H) bringt.

8. Integrierter Regler nach einem der Ansprüche 1 bis 7, **dadurch gekennzeichnet, dass** die Konfigurationsschaltung (14) mindestens zwei Konfigurationssignale (CF₁, CF₂) empfängt und auswertet, wobei die Konfigurationsschaltung (14) eine logische Kombination der mindestens zwei Konfigurationssignale (CF₁, CF₂) zur Auswahl des Vorgabesignals (V_{FB1}, V_{FB2}, V_{ref1,} V_{ref2}) auswertet.

9. Integrierter Regler nach Anspruch 8, **dadurch gekennzeichnet, dass** die Konfigurationsschaltung (14) bei einer erkannten gültigen logischen Kombination der mindestens zwei Konfigurationssignale (CF₁, CF₂) ein der erkannten logischen Kombination zugeordnetes Vorgabesignal (V_{FB1}, V_{FB2}, V_{ref1}, V_{ref2}) auswählt, und bei einer erkannten ungültigen logischen Kombination der mindestens zwei Konfigurationssignale (CF₁, CF₂) eine Ausgabe des Ausgangssignals (Vₒᵤₜ) verhindert.

10. Integrierter Regler nach Anspruch 8 oder 9, **dadurch gekennzeichnet, dass** die Konfigurationsschaltung (14) die erkannte logische Kombination der mindestens zwei Konfigurationssignale (CF₁, CF₂) verriegelt und in einem Statusspeicher (16) ablegt.

11. Steuergerät zur Ansteuerung von Personenschutzmitteln in einem Fahrzeug mit einer Regleranordnung (3, 3'), welche mindestens eine Spannung im Steuergerät (1, 1') regelt, **dadurch gekennzeichnet, dass** die Regleranordnung (3, 3) mindestens einen integrierten Regler (10, 10') nach einem der Ansprüche 1 bis 10 aufweist.

## Claims

1. Integrated regulator, in particular voltage regulator for personal protection means in a vehicle, having a regulating element (T), which converts an input signal (Vᵢₙ) into an output signal (Vₒᵤₜ) with a predefined value, and a drive circuit (12, 12') which drives the regulating element (T) to generate the output signal (Vₒᵤₜ) with the predefined value, wherein the drive circuit (12, 12') outputs the output signal (Vₒᵤₜ) with at least two different selectable values (V1, V2) via the regulating element (T) on the basis of a preset signal (V_{FB1}, V_{FB2,} V_{ref1}, V_{ref2}), wherein, in order to select the value (V1, V2) of the output signal (Vₒᵤₜ) , a configuration circuit (14) receives and evaluates at least one configuration signal (CF₁, CF₂) and selects one of at least two different preset signals (V_{FB1}, V_{FB2}, V_{ref1}, V_{ref2}) on the basis of a configuration determined during the evaluation and applies it to the drive circuit (12, 12') in order to output the output signal (Vₒᵤₜ) with the selected value (V1, V2), **characterized in that** the at least one configuration signal (CF₁, CF₂) can be generated using a pin configuration, wherein a corresponding connection pin (K1, K2) is permanently connected to earth (GND) in order to generate a first logic signal level (L) for the at least one configuration signal (CF₁, CF₂), and wherein a corresponding connection pin (K1, K2) is left open in order to generate a second logic signal level (H) for the at least one configuration signal (CF₁, CF₂) .

2. Integrated regulator according to Claim 1, **characterized in that** the at least two selectable preset signals (V_{FB1}, V_{FB2}, V_{ref1}, V_{ref2}) are permanently predefined reference signals (V_{ref1}, V_{ref2}) or feedback signals (V_{FB1}, V_{FB2}) which can be generated from the output signal (Vₒᵤₜ).

3. Integrated regulator according to Claim 2, **characterized in that**, in order to generate the output signal (Vₒᵤₜ) with a first value (V1), the configuration circuit (14) selects a first reference signal (V_{ref1}) via a selection circuit (18') and applies it to the drive circuit (12') which, in order to generate a first drive signal for the regulating element (T), compares the first reference signal (V_{ref1}) with a feedback signal (V_{FB}) generated from the output signal (Vₒᵤₜ) , wherein, in order to generate the output signal (Vₒᵤₜ) with a second value (V2), the configuration circuit (14) selects a second reference signal (V_{ref2}) via the selection circuit (18') and applies it to the drive circuit (12') which, in order to generate a second drive signal for the regulating element (T), compares the second reference signal (V_{ref2}) with the feedback signal (V_{FB}) generated from the output signal (Vₒᵤₜ).

4. Integrated regulator according to Claim 2, **characterized in that**, in order to generate the output signal (Vₒᵤₜ) with the first value (V1), the configuration circuit (14) selects a first feedback signal (V_{FB1}) via a selection circuit (18) and applies it to the drive circuit (12) which, in order to generate a first drive signal for the regulating element (T), compares the first feedback signal (V_{FB1}) with a permanently predefined reference signal (V_{ref}), wherein, in order to generate the output signal (Vₒᵤₜ) with the second value (V2), the configuration circuit (14) selects a second feedback signal (V_{FB2}) via the selection circuit (18) and applies it to the drive circuit (12) which, in order to generate a second drive signal for the regulating element (T), compares the second feedback signal (V_{FB2}) with the permanently predefined reference signal (V_{ref}).

5. Integrated regulator according to Claim 4, **characterized in that** at least two integrated voltage dividers (18a, 18b) having different divider ratios (R1/R11, R2/R21) generate the at least two selectable feedback signals (V_{FB1}, V_{FB2}) from the output signal (Vₒᵤₜ).

6. Integrated regulator according to one of Claims 1 to 5, **characterized in that** the configuration circuit (14) determines the current configuration and selects the preset signal (V_{FB1,} V_{FB2,} V_{ref1}, V_{ref2}) during system initialization.

7. Integrated regulator according to Claim 1, **characterized in that** a pull-up circuit (11) arranged inside or outside the integrated regulator (10, 10') brings a connection pin (K1, K2) which has been left open to the second logic signal level (H).

8. Integrated regulator according to one of Claims 1 to 7, **characterized in that** the configuration circuit (14) receives and evaluates at least two configuration signals (CF₁, CF₂), wherein the configuration circuit (14) evaluates a logic combination of the at least two configuration signals (CF₁. CF₂) in order to select the preset signal (V_{FB1}, V_{FB2}, V_{ref1}, V_{ref2}).

9. Integrated regulator according to Claim 8, **characterized in that**, if a valid logic combination of the at least two configuration signals (CF₁, CF₂) is detected, the configuration circuit (14) selects a preset signal (V_{FB1}, V_{FB2}, V_{ref1}, V_{ref2}) assigned to the detected logic combination and, if an invalid logic combination of the at least two configuration signals (CF₁, CF₂) is detected, prevents output of the output signal (Vₒᵤₜ) .

10. Integrated regulator according to Claim 8 or 9, **characterized in that** the configuration circuit (14) locks the detected logic combination of the at least two configuration signals (CF₁, CF₂) and stores it in a status memory (16).

11. Control device for controlling personal protection means in a vehicle, having a regulator arrangement (3, 3') which regulates at least one voltage in the control device (1, 1'), **characterized in that** the regulator arrangement (3, 3') has at least one integrated regulator (10, 10') according to one of Claims 1 to 10.

## Revendications

1. Régulateur intégré, notamment régulateur de tension destiné à des moyens de protection des personnes dans un véhicule, comportant un élément de régulation (T) qui transforme un signal d'entrée (Vᵢₙ) en un signal de sortie (Vₒᵤₜ) ayant une valeur prédéfinie, et un circuit d'attaque (12, 12') qui attaque l'élément de régulation (T) afin de générer le signal de sortie (Vₒᵤₜ) ayant la valeur prédéterminée, dans lequel le circuit d'attaque (12, 12') délivre le signal de sortie (Vₒᵤₜ) par l'intermédiaire de l'élément de régulation (T) ayant au moins deux valeurs sélectionnables différentes (V1, V2) en fonction d'un signal de consigne (V_{FB1}, V_{FB2}, V_{ref1}, V_{ref2}), dans lequel, pour sélectionner la valeur (V1, V2) du signal de sortie (Vₒᵤₜ), un circuit de configuration (14) reçoit et évalue au moins un signal de configuration (CF₁, CF₂) et sélectionne, en fonction d'une configuration déterminée lors de l'évaluation, l'un d'au moins deux signaux de consigne différents (V_{FB1}, V_{FB2}, V_{ref1}, V_{ref2}) et l'applique au circuit d'attaque (12, 12') pour délivrer le signal de sortie (Vₒᵤₜ) ayant la valeur sélectionnée (V1, V2),
**caractérisé en ce que** l'au moins un signal de configuration (CF₁, CF₂) peut être généré au moyen d'une configuration de broches, dans lequel, pour générer un premier niveau de signal logique (L) destiné à l'au moins un signal de configuration (CF₁, CF₂), une broche de connexion correspondante (K1, K2) est connectée de manière fixe à la masse (GND), et dans lequel, pour générer un second niveau de signal logique (H) destiné à l'au moins un signal de configuration (CF₁, CF₂), une broche de connexion correspondante (K1, K2) est laissée ouverte.

2. Régulateur intégré selon la revendication 1, **caractérisé en ce que** les au moins deux signaux de consigne sélectionnables (V_{FB1}, V_{FB2}, V_{ref1}, V_{ref2}) sont des signaux de référence prédéterminés (V_{ref1}, V_{ref2}) ou sont des signaux de rétroaction (V_{FB1}, V_{FB2}) pouvant être générés à partir du signal de sortie (Vₒᵤₜ).

3. Régulateur intégré selon la revendication 2, **caractérisé en ce que** le circuit de configuration (14) sélectionne un premier signal de référence (V_{ref1}) par l'intermédiaire d'un circuit de sélection (18') pour générer le signal de sortie (Vₒᵤₜ) ayant une première valeur (V1) et l'applique au circuit d'attaque (12'), qui compare le premier signal de référence (V_{ref1}) à un signal de rétroaction (V_{FB}) généré à partir du signal de sortie (Vₒᵤₜ) pour générer un premier signal d'attaque destiné à l'élément de régulation (T), dans lequel le circuit de configuration (14) sélectionne un second signal de référence (V_{ref2}) par l'intermédiaire d'un circuit de sélection (18') pour générer le signal de sortie (Vₒᵤₜ) ayant la seconde valeur (V2) et l'applique au circuit d'attaque (12'), qui compare le second signal de référence (V_{ref2}) au signal de rétroaction (V_{FB}) généré à partir du signal de sortie (Vₒᵤₜ) pour générer un second signal d'attaque destiné à l'élément de régulation (T).

4. Régulateur intégré selon la revendication 2, **caractérisé en ce que** le circuit de configuration (14) sélectionne un premier signal de rétroaction (V_{FB1}) par l'intermédiaire d'un circuit de sélection (18) pour générer le signal de sortie (Vₒᵤₜ) ayant la première valeur (V1) et l'applique au circuit d'attaque (12), qui compare le premier signal de rétroaction (V_{FB1}) à un signal de référence prédéterminé de manière fixe (V_{ref}) pour générer un premier signal d'attaque destiné à l'élément de régulation (T), dans lequel le circuit de configuration (14) sélectionne un second signal de rétroaction (V_{FB2}) par l'intermédiaire du circuit de sélection (18) pour générer le signal de sortie (Vₒᵤₜ) ayant la seconde valeur (V2) et l'applique au circuit d'attaque (12), qui compare le second signal de rétroaction (V_{FB2}) au signal de référence prédéterminé de manière fixe (V_{ref}) pour générer un second signal d'attaque destiné à l'élément de régulation (T).

5. Régulateur intégré selon la revendication 4, **caractérisé en ce qu'**au moins deux diviseurs de tension intégrés (18a, 18b) ayant des rapports de division différents (R1/R11, R2/R21) génèrent les au moins deux signaux de rétroaction sélectionnables (V_{FB1}, V_{FB2}) à partir du signal de sortie (Vₒᵤₜ).

6. Régulateur intégré selon l'une quelconque des revendications 1 à 5, **caractérisé en ce que** le circuit de configuration (14) effectue la détermination de la configuration actuelle et la sélection du signal de consigne (V_{FB1}, V_{FB2}, V_{ref1,} V_{ref2}) pendant une initialisation du système.

7. Régulateur intégré selon la revendication 1, **caractérisé en ce qu'**un circuit d'excursion haute (11) disposé à l'intérieur ou à l'extérieur du régulateur intégré (10, 10') fait passer une broche de connexion laissée ouverte (K1, K2) au second niveau de signal logique (H).

8. Régulateur intégré selon l'une quelconque des revendications 1 à 7, **caractérisé en ce que** le circuit de configuration (14) reçoit et évalue au moins deux signaux de configuration (CF₁, CF₂), dans lequel le circuit de configuration (14) évalue une combinaison logique des au moins deux signaux de configuration (CF₁, CF₂) pour sélectionner le signal de consigne (V_{FB1}, V_{FB2}, V_{ref1}, V_{ref2}) .

9. Régulateur intégré selon la revendication 8, **caractérisé en ce que** le circuit de configuration (14) sélectionne un signal de consigne (V_{FB1}, V_{FB2,} V_{ref1}, V_{ref2}) associé à la combinaison logique identifiée lorsqu'une combinaison logique valable des au moins deux signaux de configuration (CF₁, CF₂) a été détectée et empêche la fourniture en sortie du signal de sortie (Vₒᵤₜ) lorsqu'une combinaison logique invalide des au moins deux signaux de configuration (CF₁, CF₂) a été détectée.

10. Régulateur intégré selon la revendication 8 ou 9, **caractérisé en ce que** le circuit de configuration (14) verrouille la combinaison logique détectée des au moins deux signaux de configuration (CF₁, CF₂) et la stocke dans une mémoire d'état (16).

11. Appareil de commande destiné à attaquer des moyens de protection des personnes dans un véhicule, comportant un système de régulateur (3, 3') qui régule au moins une tension dans l'appareil de commande (1, 1'), **caractérisé en ce que** le système de régulateur (3, 3') comporte au moins un régulateur intégré (10, 10') selon l'une quelconque des revendications 1 à 10.
